# EUROPEAN PATENT SPECIFICATION

(11) **EP 2 031 382 B1**
(45) Date of publication and mention of the grant of the patent: **29.12.2010**
(21) Application number: 07115189.8
(22) Date of filing: 29.08.2007
(51) Int. Cl.: G01N 27/447

(54) **On-chip analysis of covalently labelled sample species**
On-Chip-Analyse kovalent markierter Probenspezies
Analyse sur puce de sortes d'échantillons à étiquette covalente

(43) Date of publication of application: 04.03.2009
(73) Proprietor: Agilent Technologies, Inc., Santa Clara CA 95051 (US)
(72) Inventor: Ruefer, Andreas, 76137, Karlsruhe (DE); Wenz, Christian c/o Agilent Technologies R&D Mark. GMBH & Co. KG, 76337 Waldbronn (DE)
(74) Representative: Barth, Daniel Mathias

(56) References cited:
- WO-A-02/40983
- WO-A-98/49548
- US-A1- 2003 203 408
- US-A1- 2007 075 010

## Description

### BACKGROUND ART

The present invention relates to analyzing a sample comprising different sample compounds in a microfluidic chip for electrophoretic separation and detection.

In microstructure technology applications as in the Agilent 2100 Bioanalyzer, by the applicant Agilent Technologies, fluid may be conveyed through miniaturized channels (which may be filled with gel material) formed in a substrate. For a capillary electrophoresis device as an example for such a microstructure technology application, an electric field is generated in the fluid channels in order to allow for a transport of components of the fluid through the channels using electric forces. Such an electric force or field may be generated by dipping contact pins of the capillary electrophoresis device into the fluid which may be filled in a well defined by a carrier element coupled to a microfluidic chip, and by applying an electrical voltage to such contact pins.

WO 00/78454 A1, DE 19928412 A1, and US 6,814,846 by the same applicant Agilent Technologies show different microfluidic chips and applications. Other microfluidic devices and applications are disclosed e.g. in WO 98/49548, US 6,280,589, or WO 96/04547.

The article "Thousandfold signal increase using field-amplified sample stacking for on-chip electrophoresis" by B. Jung, R. Bharadwaj and J. G. Santiago, Electrophoresis 2003, 24, pp. 3476-3483 describes a novel field-amplified sample stacking (FASS) capillary electrophoresis (CE) chip design that uses a photoinitiated porous polymer structure to facilitate sample injection and flow control for high-gradient FASS.

In the article "Optimization and Validation of a Quantitative Capillary Electrophoresis Sodium Dodecyl Sulfate Method for Quality Control and Stability Monitoring of Monoclonal Antibodies" by O. Salas-Solana, B. Tomlinson, S. Du, M. Parker, A. Strahan and S. Ma, Anal. Chem. 2006, 78, pp. 6583-6594, it is described that CE-SDS with precolumn labelling and laser-induced fluorescence detection is a robust methodology for the quantitative analysis of therapeutic rMAbs as it relates to size heterogeneity.

### DISCLOSURE

It is an object of the invention to improve detection sensitivity when detecting sample compounds that have been electrophoretically separated on a microfluidic chip. The object is solved by the independent claim. Further embodiments are shown by the dependent claims.

According to the present invention, a method for analyzing a sample comprising different sample compounds is provided. The method comprises staining the sample compounds by adding a dye species to a solution of the sample, the dye species having reactive groups adapted for forming covalent bonds with specific groups of the sample compounds, and providing the modified sample compounds to a microfluidic chip, the microfluidic chip being adapted to provide an electrophoretic separation. The method further comprises electrophoretically separating the modified sample compounds, and detecting separated compounds.

Covalent dye labelling for capillary gel electrophoresis is described in WO 02/40983, but it has never been employed for on-chip separation before. Especially in the context of microfluidic chips, covalent dye labelling seems to offer a wide range of advantages.

First of all, compared to conventional staining procedures, the level of background fluorescence is reduced. This leads to an increased signal-to-noise ratio. Hence, detection sensitivity is improved.

In prior art solutions, in order to reduce the background fluorescence, it has been necessary to dilute the sample solution after it has passed through the sieving matrix. This procedure has been referred to as "destaining". The step of destaining may be omitted, because the amount of background fluorescence is so small that it is not necessary to dilute the sample solution before detecting separated compounds. Accordingly, on-chip analysis of the labelled sample species is simplified a lot. The extra well containing the destaining solvent may be omitted, too.

Destaining has always been a burdensome procedure, because it required a careful control of the electric currents flowing on the electrophoresis chip. Using covalent labelling of the sample species, the step of destaining is no longer necessary, and hence, the restrictions imposed with regard to the electric currents are removed as well. As a consequence, a high conductivity background buffer may be employed in the system. Using a high conductivity background buffer is especially advantageous with regard to an effect called "stacking". Due to this effect, by using a background buffer of increased ionic strength, an increase of the respective concentrations of sample compounds is observed. As a result, the signal-to-noise ratio of an acquired peak pattern is considerably improved.

The microfluidic chip comprises an electrophoretic separation channel, and the method comprises passing the modified sample compounds through the electrophoretic separation channel, thereby electrophoretically separating the modified sample compounds.

Furthermore, the microfluidic chip comprises a detection flow path that is fluidically coupled to the separation column's outlet, wherein separated compounds are detected in the detection flow path unit.

Preferably, the sample is a protein sample comprising a plurality of different protein species.

Preferably, sodium or lithium dodecyl sulfate, also referred to as SDS or LiDS, is added to the protein sample. A solution of SDS or LiDS comprises CH₃-(CH₂)₁₀-CH₂-O-SO₃⁻ and Na⁺ or Li⁺. Adding SDS or LiDS to a protein sample and heating, the protein species are denatured, and negatively charged dodecyl sulfate-protein complexes are formed, whereby the mass-to-charge ratio is substantially constant. The dodecyl sulfate-protein complexes may be electrophoretically separated in a gel sieving matrix based on their respective size.

Preferably, the dye species is functionalized with reactive groups, said reactive groups being adapted for forming covalent bonds with amine groups of various different protein species. When adding the functionalized dye to the sample solution, the functionalized dye reacts with the protein species, and a dye-labelled protein species is obtained.

Preferably, a dye species that has been functionalized with N-hydroxy-succinimidyl-ester, also referred to as NHS, is used. N-hydroxy-succinimidyl-ester is a reactive group that forms covalent bonds with amine groups of the protein species.

According to the invention, the conditions of the reaction between the dye species and the sample solution are controlled in a way that most molecules of the sample either react with only one dye molecule or with no dye molecule at all. Thus, a quantitative correlation between the fluorescence intensity detected by the detection unit and the amount of a respective sample compound is established. In particular, multiple dye labelling of a single sample molecule is avoided.

This result is achieved, because the dye species is added in stoichiometric deficiency to the sample in solution. Preferably, covalent labelling of sample species is performed under slowed-down reaction conditions, i.e., the labelling reaction is carried out at low temperature, e.g. on ice.

Preferably, for terminating the labelling reaction, a further species adapted for reacting with the remaining reactive groups of the dye molecules in solution is added. Thus, it is possible to control the reaction time of the reaction of sample species and reactive groups of the dye. By terminating the labelling reaction after a well-defined period of time, it is made sure that multiple dye labelling of a single sample molecule is avoided. Also the further species may be added in stoichiometric abundance. Further preferably, in case NHS-functionalized dye is used, lysine might e.g. be added for terminating the labelling reaction. Lysine comprises amine groups that react with the NHS-groups of those dye molecules that have not reacted with sample species yet.

Preferably, a fluorescent dye solution is supplied to the detection flow path before analysing the separated sample compounds. The focus of the external detection unit is adjusted in dependence on the detected fluorescence image of the fluorescent dye solution flowing through the detection flow path. For example, the position of the external detection unit relative to the detection flow path may be adjusted until the image of the fluorescent dye flowing through the detection flow path is in focus.

Preferably, for adjusting the focus of the external detection unit, the fluorescent dye solution is electrokinetically moved from a dedicated well to the detection flow path, and after autofocus, the fluorescent dye solution is moved back to the dedicated well, with the fluorescent dye being contained within its dedicated well for the entire chip run.

Fluid conduits of the microfluidic chip are filled with gel matrix and with a high conductivity background buffer. The sample is dissolved in a low conductivity sample buffer. The method comprises supplying a volume of low-conductivity sample buffer to a respective fluid conduit.

For electrokinetically moving the sample compounds, an electric field is applied to the respective fluid conduit. In the region of low conductivity sample buffer, the electric field is higher than in the region of high conductivity background buffer.

Sample ions may drift from the region of low conductivity sample buffer through a conductivity interface region and enter the region of high conductivity background buffer. When crossing the conductivity interface region, the concentration of the respective sample ions is increased. This effect is commonly referred to as "stacking". The concentration increase of the sample compounds that is due to "stacking" leads to a corresponding increase in detection sensitivity.

When covalent labelling is performed before separating and detecting compounds of a sample, the background fluorescence is almost negligible. Therefore, it is no longer necessary to "destain" the sample solution before detecting the various sample compounds. As a consequence, restrictions imposed by the maximum allowable current become less burdensome, and a background buffer of increased ionic strength may be employed. The higher the ionic strength of the background buffer, the more pronounced the effects related to stacking will become. Hence, the increase of the ionic strength of the background buffer will cause an increase of the concentrations of sample compounds. This concentration increase gives rise to an improved signal-to-noise ratio when detecting the sample compounds. Preferably, the background buffer's conductivity is at least five times higher than the conductivity of the sample buffer with the sample dissolved therein.

A microfluidic chip adapted to provide an electrophoretic separation of sample compounds of a sample comprises a detection flow path, and a well filled with fluorescent dye, wherein the well is fluidically coupled with the inlet of the detection flow path. The microfluidic chip further comprises one or more electrodes adapted for electrokinetically moving the fluorescent dye from the well to the detection flow path.

For detecting sample species, a fluorescence detection unit has to be focussed onto the detection flow path of the microfluidic chip. According to a preferred embodiment, an extra well filled with fluorescent dye is provided. The fluorescent dye may be electrokinetically moved to the detection flow path. Thus, the fluorescence detection unit may recognize the fluorescent dye flowing through the detection flow path and focus on the detection flow path.

Preferably, after focusing, the dye is removed from the detection flow path and confined to its specific chip well during sample analysis. Therefore, the amount of background fluorescence during sample detection is substantially negligible.

A measurement apparatus used for the present invention is adapted for analysing compounds of a sample. The measurement apparatus comprises a microfluidic chip as described above, a detection unit adapted for detecting separated sample compounds that pass through the detection flow path, and an adjustment unit adapted for adjusting the relative position of the detection unit relative to the detection flow path in dependence on the detected fluorescence of the fluorescent dye solution. The adjustment unit is adapted for varying the position of the detection unit until the detection unit is focussed onto the detection flow path.

Preferably, the detection unit is external to the microfluidic chip. For example, the detection unit might be a confocal microscopy unit.

Software programs or routines can be preferably applied for controlling operation of the microfluidic chip.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a microfluidic chip comprising an electrophoretic separation channel and a detection flow path;

Fig. 2 shows the chemical structure of a fluorescence dye molecule that has been functionalized with an N-hydroxy-succinimidyl-ester;

Fig. 3 illustrates the chemical reaction of a protein sample with a dye species comprising reactive groups;

Fig. 4 shows the chemical reaction between an amine group of a polypeptide chain and a NHS-functionalized dye molecule;

Fig. 5 depicts the chemical structure of lysine;

Fig. 6 illustrates an effect that is referred to as "stacking"; and

Fig. 7 shows an electrophoresis chip together with an external fluorescence detection unit.

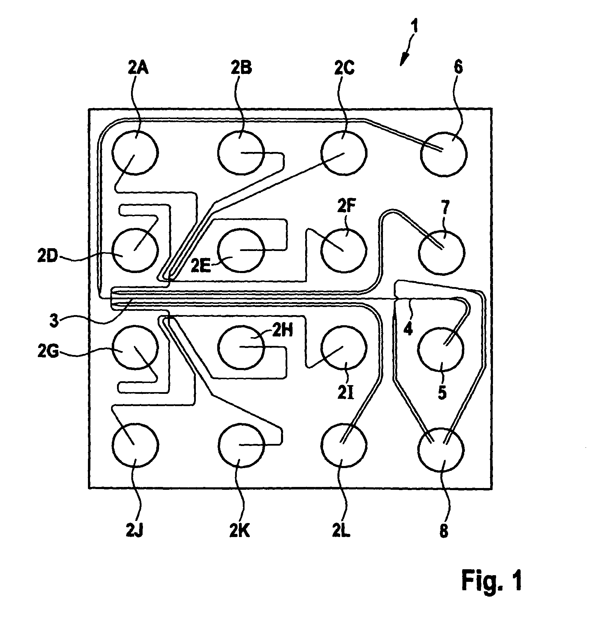

On-chip electrophoresis is a powerful technique for electrophoretically separating compounds of a given sample. Fig. 1 shows a microfluidic chip 1 adapted for performing gel electrophoresis. The microfluidic chip 1 comprises a plurality of sample wells 2A to 2L that may for example be filled with different samples. The sample wells 2A to 2L are fluidically connected, via respective fluid conduits, with an inlet of a gel-filled separation channel 3. A sample's charged compounds are electrokinetically moved through the separation channel 3. During their passage through the separation channel 3, the sample's compounds are separated according to their respective mobilities. In order to detect the compounds after they have been separated, the outlet of the separation channel 3 is fluidically coupled with a detection flow path 4, with an external detection unit being focused onto the detection flow path 4. Via the detection flow path 4, the separation channel 3 is fluidically connected with a waste well 5. The electrophoresis chip 1 further comprises auxiliary wells 6, 7 that are fluidically coupled to the inlet of the separation channel 3. The auxiliary wells 6, 7 are adapted for supplying gel and background buffer to the separation channel 3.

For size-based separation of protein samples comprising different protein species, sodium or lithium dodecyl sulphate, also referred to as SDS or LiDS, has traditionally been used for denaturing and solubilizing the protein species. A solution of SDS comprises CH₃-(CH₂)₁₀-CH₂-O-SO₃⁻ and Na⁺ or Li⁺. SDS or LiDS binds to polypeptide chains, whereby the sum of the negative charges of dodecyl sulphate anions is substantially proportional to the protein mass, resulting in similar charge densities and constant mass-to-charge-ratios. Hence, an electrophoretic separation of these dodecyl-sulphate-protein complexes based on size can be achieved in a sieving medium.

When using a fluorescence detection unit for analyzing separated protein species, the protein sample's compounds have to be labelled with a fluorescence dye before being subjected to electrophoretic separation. In prior art assays, a fluorescence dye has been added to a solution of protein sample and SDS. As a consequence, when protein-SDS-complexes are formed, fluorescence dye is embedded within these complexes, and thus, a fluorescence labelling of the denatured protein species is accomplished. However, one shortcoming of this prior art staining method is that the amount of background fluorescence is rather high, which leads to a decrease in detection sensitivity.

In order to reduce background fluorescence, prior art electrophoresis methods comprise a step of destaining, whereby a flow of non-fluorescent solvent is supplied to the separated sample compounds before they are detected. For example, the electrophoresis chip 1 shown in Fig. 1 might comprise an auxiliary well 8 fluidically coupled to the inlet of the detection flow path 4. A destaining solution contained in the auxiliary well 8 is supplied to the inlet of the protection flow path 4, in order to dilute the fluid appearing at the separation channel's outlet and to reduce the amount of background fluorescence.

In contrast to destaining methods of the prior art, embodiments of the present invention propose to perform dye labelling of the sample species by forming covalent bonds between the sample species and a dye species. Preferably, the dye species has reactive groups adapted for forming covalent bonds with specific functional groups of the sample species. After covalent dye labelling has been performed, the sample compounds are electrophoretically separated, and the separated sample compounds are detected in the detection flow path.

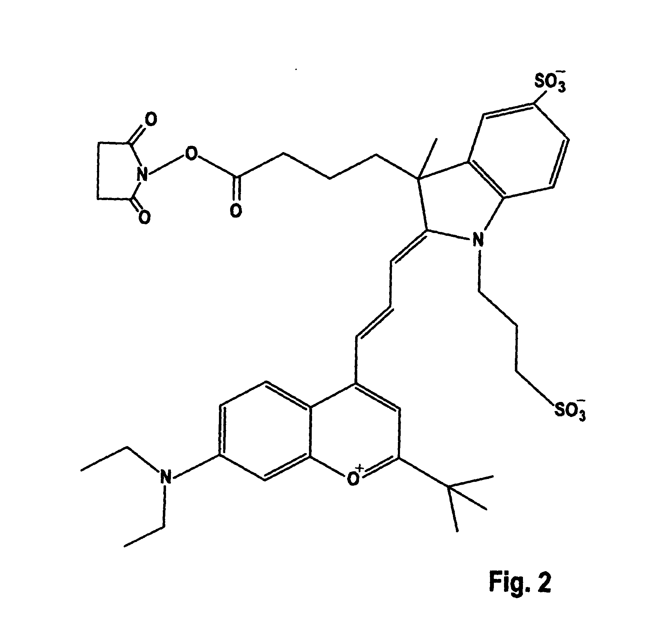

In the following, an example of protein labelling is given. In the example, a fluorescence dye shown in Fig. 2 is used for labelling compounds of a protein sample. The dye molecules have reactive N-hydroxy-succinimidyl-esters, which are adapted for establishing chemical bonds with the proteins' amine groups. In the following, the N-hydroxy-succinimidyl-esters will be referred to as NHS.

First, a dye stock solution is prepared as follows:
1.1 Take out lyophilized NHS-dye, 25µg per vial
1.2 Warm to ambient temperature
1.3 Dissolve on 7.5µl fresh dimethylformamide or dimethylsulfoxide, also referred to as DMF or DMSO, respectively, which are polar organic solvents

As a result, 7.5µl of 4mM NHS-dye stock solution is obtained. At a temperature of -20°C, and protected from light, the dye stock solution may be stored for up to three months.

Starting from the above-described dye stock solution, a working dye stock solution is prepared as follows:
2.1 Thaw up NHS-dye stock solution at ambient temperature
2.2 To 4.5µl fresh DMF add 0.5µl of NHS-dye stock solution

Thus, 5µl of 0.4mM working dye stock solution are obtained. The working dye stock solution may only be stored for three days at a temperature of -20°C, and protected from light.

Next, a protein labelling reaction is carried out as follows:
2.3 To 5µl of compatible protein sample (concentration between 1mg/ml and 10mg/ml) add 0.5µl of dye working stock solution
2.4 Mix briefly
2.5 Keep on ice for 30 min, at pH 8.5, and protected from light (minimal labelling of proteins occurs)
2.6 Add 0.5µl of 10mM L-lysine
2.7 Keep on ice for 10 min -(stop labelling reaction)

As a result, a modified protein species is obtained, the protein species being covalently labelled with fluorescence dye. The modified protein sample may be stored for up to three months at a temperature of -20°C, and protected from light, whereby freeze-thaw cycles should be avoided.

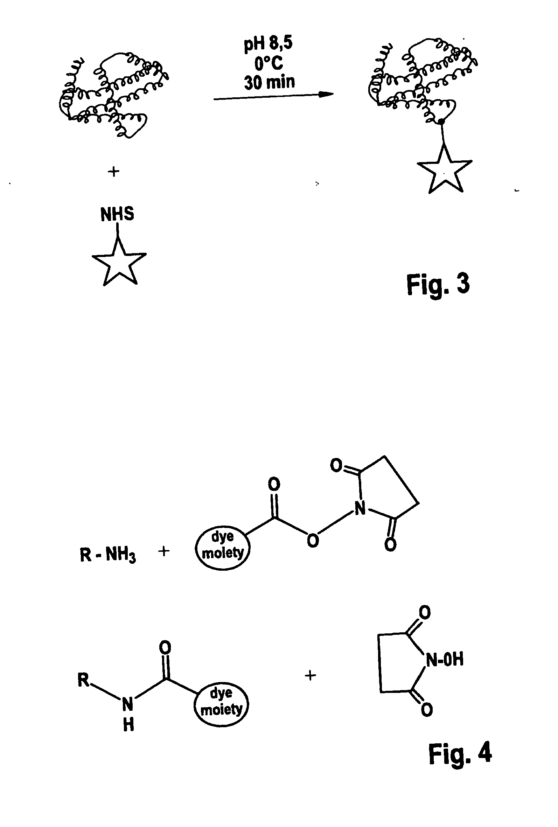

In Fig. 3, the chemical reaction of a protein sample with a dye species comprising reactive groups like e.g. NHS is illustrated. When the dye working stock solution is added to the protein sample at a pH greater than 8 (cf. the above step 2.3), the reactive groups of the dye species react with specific functional groups of the solubilized polypeptide chains. The outcome of this chemical reaction is illustrated on the right side of Fig. 3. Chemical bonds are formed between the dye molecules and the polypeptide chains, with the dye molecules being covalently attached to the polypeptides.

For the case of NHS being used as a reactive group of the dye species, Fig. 4 shows the chemical reaction between an amine group of a polypeptide chain and a NHS-functionalized dye molecule in more detail. It can be seen that via the C=O group of the dye molecule, the polypeptide's amine group establishes a chemical bond with the dye moiety, whereby the NHS-group is cleaved off.

According to the invention, the reaction conditions are controlled such that most polypeptides of the protein sample either react with only one dye molecule or with no dye molecule at all. This is accomplished by adding the dye species in stoichiometric deficiency to the sample in solution. Furthermore, the reaction might be carried out under slowed-down reaction conditions, e.g. by keeping the sample solution on ice during the reaction time. By choosing adequate reaction conditions, it is made sure that most of the polypeptides either react with only one dye molecule or with no dye molecule at all. Hence, for most of the proteins in solution, multiple labelling is avoided.

When detecting the fluorescence of labelled polypeptides that pass the fluorescence detection unit, a detection peak corresponding to a certain level of fluorescence is recorded. Because each polypeptide comprises a single dye molecule at most, a correlation between the size and shape of the detected fluorescence peak and the amount of polypeptide in solution can be established. For example, the area below the detected peak may be translated into a corresponding concentration of the respective protein species in solution.

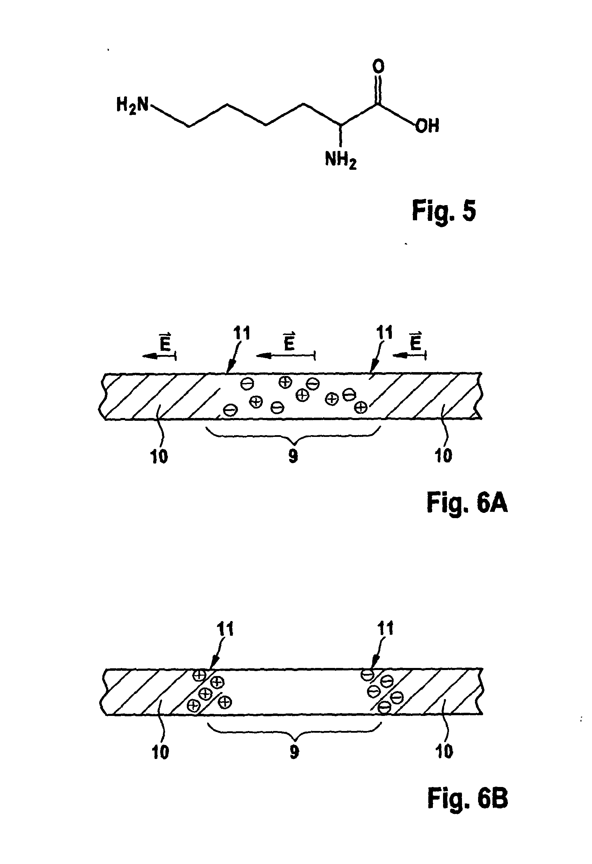

For terminating the reaction of the protein species with the functionalized dye molecules, 0.5µl of 10mM lysine is added in step 2.6 of the above-described protein labelling reaction. The chemical structure of lysine is shown in Fig. 5. Lysine is an amino acid comprising two amine groups per molecule. When lysine is added in stoichiometric abundance, NHS-functionalized dye molecules that have not reacted yet now react rather quickly with amine groups of the newly added lysine. Thus, remaining functionalized dye molecules do no longer react with polypeptide species in solution. Hence, by adding lysine in stoichiometric abundance, the protein labelling reaction can be terminated after a predefined reaction time of e.g. 30 min. By exactly controlling the reaction time of the protein labelling reaction, it is possible to precisely control the extent of protein labelling.

The amount of lysine added to the sample solution does not impair further analysis of the sample solution. In contrast, the lysine-dye conjugate can be used as a lower marker for calibrating the peak pattern obtained during sample analysis. Lysine is an amino acid of low molecular weight and high mobility. Hence, the first peak of the acquired peak pattern can be attributed to lysine.

In addition to NHS-ester, there exist a variety of other reactive groups that may be used for forming chemical bonds between a dye species and a protein sample. For example, maleimide is another reactive group of particular interest for protein labelling.

Alternatively to covalently attaching a dye moiety to a protein by NHS chemistry one may also use maleimide chemistry, known to those skilled in the art. Maelimide chemistry would attach the dye moiety to the amino acid cysteine. Reaction control for minimal labelling by temperature and stoichiometry is possible here as well.

After the protein has been labelled, the protein sample is prepared for electrophoretic separation as follows:
3.1 Optional: dilute labelling reaction 1:10 or 1:100 with water
3.2 Optional, for reducing conditions: add 7µl of 1 M dithiothreitol (DTT) to 200µl of sample buffer
3.3 Caution: make sure sample buffer is completely thawed before usage
3.4 Mix 4µl of labelled sample with 2µl of sample buffer in an 0.5ml Eppendorf tube
3.5 Heat to 95°C for 5 min
3.6 Spin to collect fluids
3.7 Sample is ready to load

In addition to the sample solution, a solution that is solely used for calibrating an obtained peak pattern is prepared. This solution comprises a plurality of protein species that correspond to a set of well-known peaks in a corresponding peak pattern. This solution is referred to as a "ladder". The protein species of the "ladder" may e.g. be labelled with NHS-functionalized dye according to the above-described protein labelling reaction (cf. the above steps 2.1 to 2.7). Before being supplied to a dedicated well of the electrophoresis chip, the "ladder" is prepared for loading as follows:
4.1 Dilute ladder labelling reaction 1:100 with water
4.2 Reducing conditions required: add 7µl of 1 M dithiothreitol (DTT) to 200µl of sample buffer
4.3 Caution: make sure, sample buffer is completely thawed before usage
4.4 Mix 4µl of labelled ladder with 2µl of sample buffer in an 0.5ml Eppendorf tube
4.5 Heat to 95°C for 5 min
4.6 Spin to collect fluids
4.7 Ladder is ready to load

When both the sample solution and the ladder are ready to load, "chip priming" is carried out, i.e. the electrophoresis chip is prepared for the chip run. First, gel is thawed up and supplied to one of the sample wells. Using a syringe capable of applying a pressure of several bars, the channels of the electrophoresis chip are entirely filled with gel. Furthermore, gel is supplied to some of the wells. Next, a well-defined volume of ladder is supplied to an appropriate well, and respective volumes of one or more sample solutions are supplied to respective sample wells. Furthermore, additional solvents might be supplied to appropriate wells. After chip priming has been carried out, the chip is placed into an analyzer unit, and a chip run is started.

By using covalent labelling for staining protein species, the amount of background fluorescence in a detection flow path of a microfluidic chip is significantly reduced. This leads to an improved signal-to-noise ratio and to an increase in detection sensitivity.

A further increase of detection sensitivity is related to an effect called "stacking", which is illustrated in Figs. 6A and 6B. A sample analyte is dissolved in a sample buffer of low ionic conductivity. A small volume of this sample solution is introduced into a channel system of an electrophoresis chip using electrokinetic or pressure-injection methods. Hence, anionic and cationic sample ions are introduced into a region 9 of low ionic conductivity. In contrast, a background buffer 10 in the system has a relatively high ionic conductivity. When an electric field is applied along the separation channel, there is a high electric field in the region 9 of low ionic conductivity, and there is a low electric field in the regions 10 of high conductivity background buffer. Sample ions drift within the high field sample region 9, pass through the conductivity interface regions 11 and enter the low electric field regions 10. As sample ions cross the interface regions 11 between the low- and high-conductivity buffers, sample concentration increases. This increase of sample concentration, which is referred to as "stacking", gives rise to a corresponding increase in detection sensitivity, which is highly desirable. As shown in Fig. 6B, cations electromigrate in the direction of the electric field and stack at the interface on the cathode side, while anions stack at the anionic interface.

The increase of sample concentration is strongly related to the ionic strength of the background buffer. By increasing the background buffer's conductivity, a more pronounced increase of sample concentration can be obtained. However, increasing the background buffer's ionic strength also increases the electric current flowing through the separation channel. The maximum electric current through the separation channel imposes an upper limit on the background buffer's ionic strength.

In prior art solutions, there has been a rather high concentration of fluorescence dye in the background buffer and accordingly, the amount of background fluorescence has been quite high. In order to reduce background fluorescence, it has been necessary to dilute the sample solution after it has passed the separation channel. For this purpose, a continuous flow of dilution solvent has been supplied to the sample solution before reaching the detection flow path. The step of diluting the sample solvent is generally referred to as "destaining". For example, a continuous flow of destaining solvent might e.g. be supplied from the auxiliary well 8 shown in Fig. 1 to the detection flow path 4. For effectively reducing background fluorescence, the flow of destaining solution might e.g. be about ten times as high as the flow of sample solution. This implies that the electrical current in the destaining flow path is about ten times as high as the electrical current in the separation flow path. For example, the electrical current in the destaining flow path might be in the order of 25µA, whereas the current in the separation flow path might only be in the order of 2.5µA. This maximum current in the separation flow path imposes an upper limit on the ionic strength of the background buffer.

By covalently labelling the protein species, the concentration of fluorescence dye in the background buffer is substantially negligible. Therefore, it is no longer necessary to dilute the sample solution before it reaches the detection flow path. In particular, the step of destaining can be omitted. As a consequence, the electrical current in the separation channel is no longer limited to 2.5µA. In fact, the electrical current through the separation channel may now be raised up to about 25µA, as it is no longer necessary to provide a current of ten times this magnitude in a destaining flow path.

Hence, covalent labelling allows for increasing the ionic strength of the background buffer. As a consequence, the effects due to stacking are enhanced.

In prior art solutions, a background buffer of 120mM Tricine, 42mM Tris-base, 0.2% SDS, has been employed at pH 7.7. The formula of Tris is (HO-CH₂)₃-C-NH₂ and the formula of Tricine is (HO-CH₂)₃-C-NH-CH₂-COOH. In contrast, according to embodiments of the present invention, a background buffer composed of 250mM Tricine, 87.5mM Tris-base, 1% SDS might be used. Compared to the formerly-used background buffer, the concentration of SDS is increased by a factor of 5, and the respective concentrations of Tricine and Tris-base are increased by a factor of 2. As a consequence, the conductivity of the new background buffer is increased by a factor of approximately 10 relative to the former background buffer's conductivity.

By enhancing the effects related to stacking, the respective concentrations of separated sample compounds are increased. The signal-to-noise ratio of the acquired peak pattern is improved, and the detection sensitivity is increased.

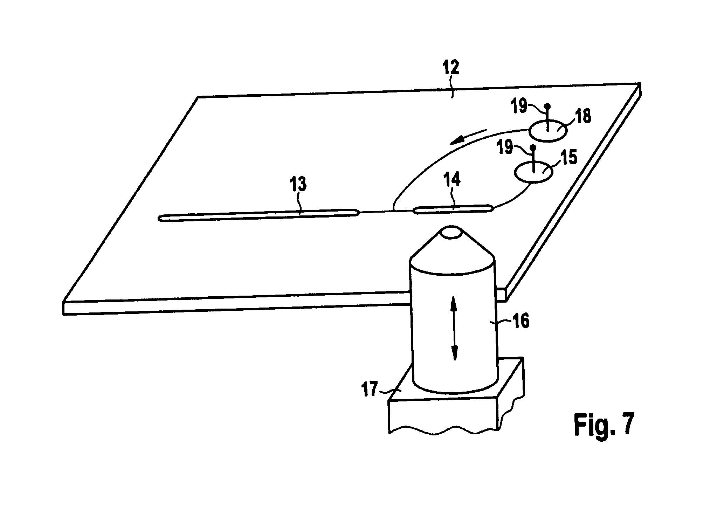

Fig. 7 shows an electrophoresis chip 12 comprising a separation flow path 13 and a detection flow path 14. The detection flow path 14 is fluidically coupled with a waste well 15. Furthermore, an external fluorescence detection unit 16 is shown, which is adapted for detecting fluorescence of species passing through the detection flow path 14. The fluorescence detection unit 16 may comprise an adjustment unit 17 for adjusting the position of the fluorescence detection unit 16 relative to the electrophoresis chip 12. The position is adjusted until the fluorescence detection unit 16 is focused onto the detection flow path 14. The fluorescence detection unit 16 may e.g. be realized as a confocal microscopy unit.

In prior art solutions, there has always been a certain amount of background fluorescence in the detection flow path 14. Hence, it has been possible to adjust the focus of the fluorescence detection unit 16 in dependence on an acquired fluorescence image of the detection flow path 14.

By covalently labelling the protein species, the concentration of fluorescence dye in the background buffer is almost negligible. For performing the focusing, an auxiliary well 18 containing fluorescence dye is provided. By supplying suitable currents to electrodes 19, the fluorescence dye is electrokinetically moved from the auxiliary well 18 to the detection flow path 14. Then, the focus of the external fluorescence detection unit 16 is adjusted in dependence on the detected fluorescence image. After the optical unit is adjusted and focused to the microfluidic channel, the dye is moved back to its reservoir well and confined there during sample analysis. Therefore, fluorescent background during sample separation and detection is substantially negligible.

For example, in Fig. 1, an auxiliary well 8 containing a destaining solvent is shown. When employing covalent labelling, the destaining step is no longer necessary. Therefore, the auxiliary well 8 is vacant and may be used for storing a fluorescence dye solution. For adjusting the focus of the fluorescence detection unit 16, the fluorescence dye solution is moved from the auxiliary well 8 to the detection flow path 14.

## Claims

1. A method for analyzing a sample comprising different sample compounds, the method comprising
staining the sample compounds by adding a dye species to a solution of the sample, the dye species having reactive groups adapted for forming covalent bonds with specific groups of the sample compounds,
providing the modified sample compounds into a fluid conduit , wherein the fluid conduit is filled with a gel matrix, electrophoretically separating the modified sample compounds within the gel-filled fluid conduit, and
detecting separated compounds
, **characterised in that** the fluid conduit is in a microfluidic chip (1,12) and **in that** the dye species is added in stoichiometric deficiency to the sample in solution, and the conditions of the reaction between the dye species and the sample solution are controlled in a way that most molecules of the sample either react with only one dye molecule or with no dye molecule at all.

2. The method of claim 1, comprising at least one of:
the microfluidic chip comprises an electrophoretic separation channel, wherein the method comprises passing the modified sample compounds through the electrophoretic separation channel, thereby electrophoretically separating the modified sample compounds;
the microfluidic chip comprises a detection flow path that is fluidically coupled to the separation column's outlet, wherein separated compounds are detected in the detection flow path;
the microfluidic chip comprises a detection flow path, wherein a detection unit external to the microfluidic chip is used for detecting modified sample compounds passing through the detection flow path.

3. The method of claim 1 or 2, further comprising at least one of:
the dye species is a fluorescent dye species adapted for being detected by a fluorescence detection unit;
the dye species has reactive groups adapted for forming covalent bonds with the protein sample's amine groups;
dye molecules of the dye species have an N-hydroxy-succinimidyl-ester, also referred to as NHS, adapted for reacting with amine groups of the protein sample;
the reactive groups of the dye species comprise one or more of: N-hydroxy-succinimidyl-ester, also referred to as NHS, maleimide;
the sample is a protein sample comprising one or more protein compounds.

4. The method of claim 1 or any one of the above claims, further comprising at least one of:
during sample separation and detection, a substantially non-fluorescent background buffer is utilized;
adding sodium dodecyl sulfate, also referred to as SDS, or lithium dodecyl sulfate, also referred to as LiDS, for solubilizing and charging proteins of the protein sample;
conditions for staining, in particular the amount of the dye species added to the solution of the sample are such that most molecules of the sample either react with only one dye molecule or with no dye molecule at all.

5. The method of claim 1 or any one of the above claims, wherein:
staining of the sample compounds is carried out under slowed-down reaction conditions, and/or
at low temperature, and/or
on ice.

6. The method of claim 1 or any one of the above claims, wherein, after the staining has been carried out, a further species adapted for reacting with the remaining reactive groups of the dye species in solution is added.

7. The method of the preceding claim, further comprising at least one of the following features:
the further species is added in stoichiometric abundance;
the further species is lysine;
the further species acts as a lower marker when separating the modified sample compounds.

8. The method of claim 1 or any one of the above claims, wherein the microfluidic chip comprises a detection flow path, and wherein the method further comprises
before analysing the separated sample compounds, providing a fluorescent dye solution to the detection flow path, wherein preferably the fluorescent dye solution is provided to the detection flow path by electrokinetically moving the fluorescent dye solution from a dedicated well to the detection flow path,
adjusting the relative position of the detection unit relative to the detection flow path in dependence on the detected fluorescence of the fluorescent dye solution.

9. The method of the preceding claim, further comprising
moving the fluorescent dye solution from the detection flow path back to the dedicated well, wherein the amount of fluorescent dye remaining in the detection flow path is substantially negligible.

10. The method of claim 1 or any one of the above claims, wherein the microfluidic chip comprises fluid conduits filled with a high conductivity background buffer, and
wherein the method comprises supplying the sample dissolved in a low conductivity sample buffer to a respective fluid conduit.

11. The method of the preceding claim, comprising at least one of:
when an electric field is applied to the respective fluid conduit, there is a high electric field in a region of low conductivity sample buffer, and there is a low electric field in a region of high conductivity background buffer;
sample concentration increases as sample ions drift from a region of low conductivity sample buffer through a conductivity interface region and enter a region of high conductivity background buffer;
the background buffer's conductivity is at least five times higher than the conductivity of the sample buffer with the sample dissolved therein.

## Patentansprüche

1. Verfahren zum Analysieren einer Probe, die verschiedene Probenverbindungen enthält, wobei das Verfahren die folgenden Schritte aufweist
Anfärben der Probenverbindungen durch Zugeben eines Farbstoffs zu einer Lösung der Probe, wobei der Farbstoff reaktive Gruppen aufweist, die in der Lage sind, mit speziellen Gruppen der Probenverbindungen kovalente Bindungen zu bilden,
Einführen der modifizierten Probenverbindungen in eine Fluidleitung, wobei die Fluidleitung mit einer Gelmatrix ausgefüllt ist,
elektrophoretisches Trennen der modifizierten Probenverbindungen im Innern der mit Gel ausgefüllten Fluidleitung, und
Detektieren der getrennten Verbindungen,
**dadurch gekennzeichnet, dass** sich die Fluidleitung auf einem Mikrofluid-Chip (1, 12) befindet und dass der Farbstoff in stöchiometrischem Unterschuss zur Probe in der Lösung gegeben wird, und dass die Reaktionsbedingungen für die Reaktion zwischen dem Farbstoff und der Probenlösung so gesteuert werden, dass die meisten Moleküle der Probe entweder nur mit einem Farbstoffmolekül oder mit überhaupt keinem Farbstoffmolekül reagieren.

2. Verfahren Anspruch 1, das mindestens eines der folgenden Merkmale aufweist:
der Mikrofluid-Chip weist einen elektrophoretischen Trennkanal auf, wobei das Verfahren das Durchlaufen der modifizierten Probenmoleküle durch den elektrophoretischen Trennkanal aufweist und dabei die modifizierten Probenverbindungen elektrophoretisch getrennt werden;
der Mikrofluid-Chip weist einen über ein Fluid mit dem Ausgang der Trennsäule verbundenen Detektionsströmungspfad auf, wobei die getrennten Verbindungen im Detektionsströmungspfad detektiert werden;
der Mikrofluid-Chip weist einen Detektionsströmungspfad auf, wobei zum Detektieren der durch den Detektionsströmungspfad fließenden modifizierten Probenverbindungen eine außerhalb des Mikrofluid-Chips angeordnete Detektionseinheit dient.

3. Verfahren Anspruch 1 oder 2, das mindestens eines der folgenden Merkmale aufweist:
bei dem Farbstoff handelt es sich um einen Fluoreszenzfarbstoff, der durch eine Fluoreszenz-Detektionseinheit detektiert werden kann;
der Farbstoff weist reaktive Gruppen auf, die mit den Aminogruppen der Proteinprobe kovalente Bindungen bilden können;
Farbstoffmoleküle des Farbstoffs weisen einen N-hydroxysuccinimidylester auf, der auch unter der Bezeichnung NHS bekannt ist und mit den Aminogruppen der Proteinprobe reagieren kann;
zu den reaktiven Gruppen des Farbstoffs gehören: N-hydroxysuccinimidylester, der auch unter der Bezeichnung NHS bekannt ist und/oder Maleinsäureimid;
bei der Probe handelt es sich um eine Proteinprobe, die eine oder mehrere Proteinverbindungen aufweist.

4. Verfahren nach Anspruch 1 oder einem der vorhergehenden Ansprüche, das mindestens eines der folgenden Merkmale aufweist:
während der Trennung und Detektion der Probe wird ein im Wesentlichen nicht fluoreszierender Hintergrundpuffer verwendet;
Hinzufügen von Natriumdodecylsulfat, auch unter der Bezeichnung SDS bekannt, oder Lithiumdodecylsulfat, auch unter der Bezeichnung LiDS bekannt, um die Proteine der Proteinprobe in Lösung zu bringen und aufzuladen;
die Bedingungen für das Anfärben, insbesondere die Menge des zur Lösung der Probe hinzugefügten Farbstoffs, werden so gewählt, dass die meisten Moleküle der Probe entweder nur mit einem Farbstoffmolekül oder mit überhaupt keinem Farbstoffmolekül reagieren.

5. Verfahren nach Anspruch 1 oder einem der vorhergehenden Ansprüche, wobei:
das Anfärben der Probenverbindungen unter verlangsamten Reaktionsbedingungen und/oder
bei niedriger Temperatur und/oder
auf Eis erfolgt.

6. Verfahren nach Anspruch 1 oder einem der vorhergehenden Ansprüche, wobei nach Beendigung des Anfärbens eine weitere chemische Substanz zugegeben wird, die mit den restlichen
reaktiven Gruppen des Farbstoffs in der Lösung reagiert.

7. Verfahren nach dem vorhergehenden Anspruch, das ferner mindestens eines der folgenden Merkmale aufweist:
die weitere chemische Substanz wird im stöchiometrischen Überschuss zugegeben;
bei der weiteren chemischen Substanz handelt es sich um Lysin;
die weitere chemische Substanz dient als schwächere Markierungssubstanz, wenn die modifizierten Probenverbindungen getrennt werden.

8. Verfahren nach Anspruch 1 oder einem der vorhergehenden Ansprüche, wobei der Mikrofluid-Chip einen Detektionsströmungspfad aufweist und das Verfahren ferner die folgenden Schritte aufweist:
Einführen einer Lösung des Fluoreszenzfarbstoffs in den Detektionsströmungspfad vor dem Analysieren der getrennten Probenverbindungen, wobei die Lösung des Fluoreszenzfarbstoffs in den Detektionsströmungspfad eingeführt wird, indem sie vorzugsweise elektrokinetisch von einer speziellen Wanne in den Detektionsströmungspfad befördert wird,
Einstellen der relativen Position der Detektionseinheit in Bezug auf den Detektionsströmungspfad in Abhängigkeit von der detektierten Fluoreszenz der Lösung des Fluoreszenzfarbstoffs.

9. Verfahren nach dem vorhergehenden Anspruch, das ferner den folgenden Schritt aufweist:
Befördern der Lösung des Fluoreszenzfarbstoffs vom Detektionsströmungspfad zu der speziellen Wanne zurück, wobei die Menge des im Detektionsströmungspfad zurückbleibenden Fluoreszenzfarbstoffs im Wesentlichen vernachlässigbar gering ist.

10. Verfahren nach Anspruch 1 oder einem der vorhergehenden Ansprüche, wobei der Mikrofluid-Chip Fluidleitungen aufweist, die mit einem Hintergrundpuffer mit hoher Leitfähigkeit ausgefüllt sind, und
wobei das Verfahren das Einführen der Probe in eine entsprechende Fluidleitung aufweist, die in einem Probenpuffer mit einer niedrigen Leitfähigkeit gelöst ist.

11. Verfahren nach dem vorhergehenden Anspruch, das mindestens eines der folgenden Merkmale aufweist:
wenn an die entsprechende Fluidleitung ein elektrisches Feld angelegt wird, herrscht in einem Bereich mit dem Probenpuffer mit niedriger Leitfähigkeit ein starkes elektrisches Feld, in einem Bereich mit dem Hintergrundpuffer mit hoher Leitfähigkeit jedoch ein schwaches elektrisches Feld;
die Probenkonzentration nimmt in dem Maße zu, wie Probenionen von einem Bereich mit dem Probenpuffer mit niedriger Leitfähigkeit durch einen Leitfähigkeits-Übergangsbereich in einen Bereich mit dem Hintergrundpuffer mit hoher Leitfähigkeit wandern;
die Leitfähigkeit des Hintergrundpuffers ist mindestens fünfmal so hoch wie die Leitfähigkeit des Probenpuffers mit der darin gelösten Probe.

## Revendications

1. Procédé pour analyser un échantillon comprenant différents composés d'échantillon, le procédé comprenant
la coloration des composés d'échantillon en ajoutant une sorte de colorant à une solution de l'échantillon, la sorte de colorant comportant des groupes réactifs adaptés pour former des liaisons covalentes avec des groupes spécifiques des composés d'échantillon ;
l'application des composés d'échantillon modifiés dans une conduite de fluide, dans lequel la conduite de fluide est remplie d'une matrice de gel ;
la séparation par électrophorèse des composés d'échantillon modifiés à l'intérieur de la conduite de fluide remplie de gel, et
la détection des composés séparés,
**caractérisé en ce que** la conduite de fluide se trouve dans une puce microfluidique (1, 12) et **en ce que** la sorte de colorant est ajoutée en déficience stoechiométrique à l'échantillon en solution, et les conditions de la réaction entre les sortes de colorant et la solution contenant l'échantillon sont contrôlées de manière à ce que la plupart des molécules de l'échantillon réagissent avec une molécule de colorant seulement ou avec aucune molécule de colorant.

2. Procédé suivant la revendication 1, comprenant au moins une des particularités suivantes :
la puce microfluidique comprend un canal de séparation électrophorétique, dans laquelle le procédé comprend le passage des composés d'échantillon modifiés par le canal de séparation électrophorétique, séparant de ce fait par électrophorèse les composés d'échantillon modifiés ;
la puce microfluidique comprend une voie d'écoulement de détection qui est raccordée par voie fluidique à l'orifice de sortie de la colonne de séparation, dans laquelle les composés séparés sont détectés dans la voie d'écoulement de détection ;
la puce microfluidique comprend une voie d'écoulement de détection, dans laquelle une unité de détection extérieure à la puce microfluidique est utilisée pour détecter des composés d'échantillon modifiés traversant la voie d'écoulement de détection.

3. Procédé suivant la revendication 1 ou 2, comprenant en outre au moins une des étapes suivantes :
la sorte de colorant est une sorte de colorant fluorescent à même d'être détectée par une unité de détection de fluorescence ;
la sorte de colorant comporte des groupes réactifs adaptés pour former des liaisons covalentes avec les groupes d'amines de l'échantillon protéinique ;
les molécules de colorant de la sorte de colorant comportent un ester N-hydroxy-succinimidylique, également appelé NHS, à même de réagir avec des groupes d'amines de l'échantillon protéinique ;
les groupes réactifs de la sorte de colorant comprennent un ou plusieurs éléments du groupe comprenant : un ester N-hydroxy-succinimidylique, également appelé NHS, la maléimide ;
l'échantillon est un échantillon protéinique comprenant un ou plusieurs composés protéiniques.

4. Procédé suivant la revendication 1 ou l'une quelconque des revendications précédentes, comprenant en outre au moins une des étapes suivantes :
pendant la séparation de l'échantillon et la détection, l'utilisation d'un tampon de base pratiquement non fluorescent ;
l'ajout de dodécylsulfate de sodium, également appelé SDS, ou de dodécylsulfate de lithium, également appelé LiDS, pour solubiliser et charger les protéines de l'échantillon protéinique ;
les conditions pour colorer, en particulier la quantité de la sorte de colorant ajoutée à la solution de l'échantillon, sont telles que la plupart des molécules de l'échantillon réagissent avec une molécule de colorant seulement ou avec aucune molécule de colorant.

5. Procédé suivant la revendication 1 ou l'une quelconque des revendications précédentes, dans lequel :
la coloration des composés d'échantillon est exécutée dans des conditions de réaction ralentie, et/ou
à basse température, et/ou
sur de la glace.

6. Procédé suivant la revendication 1 ou l'une quelconque des revendications précédentes, dans lequel, après l'exécution de la coloration, une autre sorte à même de réagir avec les
groupes réactifs suivants de la sorte de colorant en solution est ajoutée.

7. Procédé suivant la revendication précédente, comprenant en outre au moins une des particularités suivantes :
l'autre sorte est ajoutée en abondance stoechiométrique ;
l'autre sorte est la lysine ;
l'autre sorte sert de marqueur de niveau moindre lors de la séparation des composés d'échantillon modifiés.

8. Procédé suivant la revendication 1 ou l'une quelconque des revendications précédentes, dans lequel la puce microfluidique comprend une voie d'écoulement de détection, et dans lequel le procédé comprend en outre
avant l'analyse des composés d'échantillon séparés, la fourniture d'une solution de colorant fluorescent à la voie d'écoulement de détection, dans lequel, de préférence, la solution de colorant fluorescent est fournie à la voie d'écoulement de détection en déplaçant par voie électrocinétique la solution de colorant fluorescent depuis un puits dédié vers la voie d'écoulement de détection,
le réglage de la position relative de l'unité de détection par rapport à la voie d'écoulement de détection en fonction de la fluorescence détectée de la solution de colorant fluorescent.

9. Procédé suivant la revendication précédente, comprenant en outre
le déplacement de la solution de colorant fluorescent depuis la voie d'écoulement de détection en retour vers le puits dédié, dans lequel la quantité de colorant fluorescent restant dans la voie d'écoulement de détection est pratiquement négligeable.

10. Procédé suivant la revendication 1 ou l'une quelconque des revendications précédentes, dans lequel la puce microfluidique comprend des conduites de fluide remplies d'un tampon de base à haute conductivité, et
dans lequel le procédé comprend la fourniture de l'échantillon dissous dans un tampon d'échantillon de faible conductivité à une conduite de fluide respective.

11. Procédé suivant la revendication précédente, comprenant au moins une des particularités suivantes :
lorsqu'un champ électrique est appliqué sur la conduite de fluide respective, il y a un champ électrique intense dans une région de tampon d'échantillon de faible conductivité, et il y a un champ électrique faible dans une région de tampon de base de haute conductivité ;
la concentration de l'échantillon augmente à mesure que les ions d'échantillon s'éloignent d'une région de tampon d'échantillon de faible conductivité à travers une région d'interface de conductivité et pénètrent dans une région de tampon de base de haute conductivité ;
la conductivité du tampon de base est au moins cinq fois supérieure à la conductivité du tampon d'échantillon dans lequel l'échantillon est dissous.
